# EUROPEAN PATENT APPLICATION

(11) **EP 4 746 167 A1**
(43) Date of publication of application: **20.05.2026**
(21) Application number: 24877647.8
(22) Date of filing: 11.10.2024
(51) Int. Cl.: H01M 50/367, H01M 10/6556, H01M 50/213, H01M 50/249, H01M 50/242

(54) **BATTERY PACK AND VEHICLE COMPRISING SAME BATTERY PACK**

(30) Priority: 11.10.2023 KR 20230135439
(71) Applicant: LG Energy Solution, Ltd., Seoul 07335 (KR)
(72) Inventor: LEE, Yong-Ho, Daejeon 34122 (KR); PARK, So-Jeong, Daejeon 34122 (KR); SONG, Jong-Min, Daejeon 34122 (KR); AHN, Jun-Young, Daejeon 34122 (KR); OH, Kwang-Keun, Daejeon 34122 (KR); JUNG, In-Hyuk, Daejeon 34122 (KR); YANG, Jin-Oh, Daejeon 34122 (KR)
(74) Representative: Plasseraud IP
(86) International application number: PCT/KR2024/096346
(87) International publication number: WO 2025/080112

(57) **Abstract**

A battery pack according to the present disclosure may include a cell array structure including a plurality of battery cells; and a pack case accommodating the cell array structure and configured to support the cell array structure while forming a predetermined venting space below the cell array structure. According to the present disclosure, there may be provided a battery pack in which a venting space for rapid discharge in the event of occurrence of venting gas or flames may be secured at the bottom of the pack case, and at the same time, the cell array structure with a larger area having a high load may be firmly supported in the pack case to limit movement in the thickness direction, thereby being more resistant to vibration or external impact.

## Description

### TECHNICAL FIELD

The present disclosure relates to a battery pack and a vehicle including the same, and more specifically, to a battery pack capable of firmly supporting a large-area cell array structure and a vehicle including the same. This application is based on and claims priority from Korean Patent Application No. 10-2023-0135439 filed on October 11, 2023, with the Korean Intellectual Property Office, the disclosure of which is incorporated herein in its entirety by reference.

### BACKGROUND ART

In recent years, as the demand for portable electronic products such as laptops, video cameras, and mobile phones has rapidly increased and the development of electric vehicles, energy storage batteries, robots, and satellites has begun in earnest, research on high-performance secondary batteries that can be charged and discharged repeatedly has been actively conducted.

Currently commercialized secondary batteries include nickel cadmium batteries, nickel hydrogen batteries, nickel zinc batteries, lithium-ion secondary batteries, and the like. Among them, lithium-ion secondary batteries are in the spotlight because they have almost no memory effect compared to nickel-based secondary batteries and thus have advantages of free charge/discharge, very low self-discharge rate, and high energy density.

These lithium-ion secondary batteries mainly use a lithium-based oxide and a carbon material as a positive electrode active material and a negative electrode active material, respectively. Additionally, a lithium-ion secondary battery includes an electrode assembly in which a positive electrode plate and a negative electrode plate coated with the positive electrode active material and the negative electrode active material, respectively, are disposed with a separator therebetween, and an exterior material that seals and accommodates the electrode assembly together with an electrolyte solution.

Meanwhile, depending on the shape of a battery case, lithium-ion secondary batteries may be classified into pouch-type secondary batteries in which the electrode assembly is embedded in a pouch of an aluminum laminate sheet and can-type secondary batteries in which the electrode assembly is embedded in a metal can. And, the can-type secondary batteries may also be divided into cylindrical batteries and prismatic batteries according to the form of the metal can. These lithium-ion secondary batteries are used as battery modules or battery packs in which multiple battery cells are assembled in a dense structure by overlapping or stacking them in a state of being mounted on themselves or on a cartridge and then electrically connected to each other so as to provide high voltage and high current.

Recently, there has been active research and development on a battery pack composed of a single module or cell array with improved structural rigidity by erecting and densely stacking a plurality of battery cells of cylindrical batteries, and a pack frame that surrounds them. In particular, the size of the single module or cell array tends to increase in a large area.

Therefore, there is an urgent need to develop a structure of a pack frame that secures sufficient discharge paths for venting gases or the like in the event of thermal runaway of a single module or cell array, and at the same time, firmly supports a large-area single module or cell array.

### DISCLOSURE

### Technical Problem

The present disclosure is designed to solve the problems of the related art, and therefore the present disclosure is directed to providing a battery pack in which a venting space for rapid discharge in the event of occurrence of venting gas or flames may be secured at the bottom of the pack case, and at the same time, the cell array structure with a larger area having a high load compared to the conventional one may be firmly supported in the pack case to limit movement in the thickness direction, thereby being more resistant to vibration or external impact, and a vehicle including the same.

Technical problems to be solved by the present disclosure are not limited to the above-described problems, and other problems not mentioned herein may be clearly understood by those skilled in the art from the following description of the present disclosure.

### Technical Solution

A battery pack according to the present disclosure may include a cell array structure including a plurality of battery cells; and a pack case accommodating the cell array structure and configured to support the cell array structure while forming a predetermined venting space below the cell array structure.

The pack case may include a bottom plate that faces and supports the cell array structure at the bottom and partially protrudes from the plate surface to form the venting space.

The bottom plate may be provided with an uneven longitudinal cross-section in one direction.

The cell array structure may include a plurality of unit cell groups including the plurality of battery cells and cooling tubes attached to the plurality of battery cells; and side frames disposed between the plurality of unit cell groups, wherein the uneven shape may be formed in a direction that intersects perpendicular to a direction in which the plurality of battery cells, the cooling tubes, and the side frames are disposed in a row.

The uneven shape may be composed of a convex section formed to protrude upward and a concave section formed to be recessed downward, based on an imaginary axial center in the thickness direction of the bottom plate.

The convex section may be disposed to face a lower portion of the side frame, and the concave section may be disposed to be spaced apart from a lower portion of the unit cell group.

The side frame may include a side structure interposed between the unit cell groups; and a side wall interposed between the pack case and the unit cell group, wherein the convex section may be provided to face a lower surface of at least one of the side structure or the side wall.

A cushioning member may be interposed in at least one of between the convex section and the side structure and between the convex section and the side wall.

The cushioning member may be made of a polyurethane material.

A width of the concave section may be greater than a width of the convex section.

The pack case may further include a top cover plate covering the cell array structure at an upper surface; and an outer side wall that is disposed on an outer edge and to which the bottom plate is coupled, wherein the outer side wall may be provided in a hollow shape, and a plurality of reinforcement partition walls may be provided therein.

At least one protrusion formed to protrude downward may be provided at a lower portion of the side frame, and at least one recessed groove having a shape corresponding to the protrusion may be formed at an upper surface of the convex section.

The protrusion may be forcibly fitted into the recessed groove.

The protrusion may be coupled to the recessed groove so that unidirectional movement is restricted.

Additionally, according to the present disclosure, a vehicle including one or more battery pack described above may be provided.

### Advantageous Effects

According to one aspect of the present disclosure, a venting space in the uneven shape may be secured in the bottom plate of the pack case, and thus, when a thermal runaway event occurs, venting gas, flames, or the like may be quickly discharged, thereby effectively dispersing heat energy and delaying heat transfer phenomenon.

Additionally, according to one aspect of the present disclosure, the cell array structure with a larger area than the conventional one may be firmly supported by the convex section of the bottom plate from the bottom, which may limit movement in the thickness direction, thereby being resistant to vibration or external impact. In particular, the convex section may uniformly contact and support the entire area of the cell array structure, thereby improving the structural rigidity of the cell array structure 100 against bending or distortion. Additionally, problems of dislocation and shorting of electrical connection lines that may occur due to deformation such as distortion of the cell array structure may be significantly reduced, and the risk of cracks or breakage at the mounting point between the cell array structure and the pack case may also be reduced.

Effects to be obtained by the present disclosure are not limited to the above-described effects, and other effects not mentioned herein may be clearly understood by those having ordinary skill in the art from this specification and the accompanying drawings.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a schematic perspective view of the main configurations of a battery pack according to an embodiment of the present disclosure.
FIG. 2 is an exploded perspective view of FIG. 1.
FIG. 3 is a perspective view of a battery pack according to an embodiment of the present disclosure with a top cover plate removed.
FIG. 4 is a perspective view of the bottom plate and the outer side wall in FIG. 2.
FIG. 5 is a longitudinal partial cross-sectional view of FIG. 3.
FIG. 6 is a view showing a cell array structure applied to a battery pack according to an embodiment of the present disclosure.
FIG. 7 is a view showing a part of an upper portion of a cell array structure accommodated in a battery pack according to an embodiment of the present disclosure.
FIG. 8 is a longitudinal cross-sectional view in a battery pack according to an embodiment of the present disclosure.
FIG. 9 is a view showing a flow of venting gas in a battery pack according to an embodiment of the present disclosure.
FIGS. 10 and 11 are views showing a state of supporting a cell array structure in a battery pack according to other embodiments of the present disclosure.
FIG. 12 is a view for describing a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the embodiment described in this specification and the configuration shown in the drawings are only a most preferred embodiment of the present disclosure, not intended to entirely represent the technical aspects of the present disclosure, so it should be understood that various equivalents and modifications may be made thereto at the time of filing the present application.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

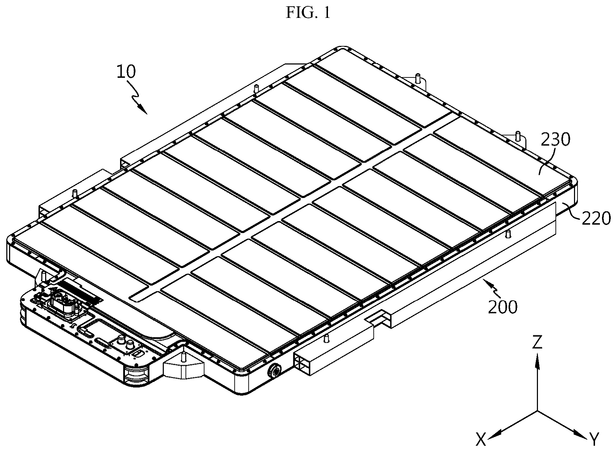

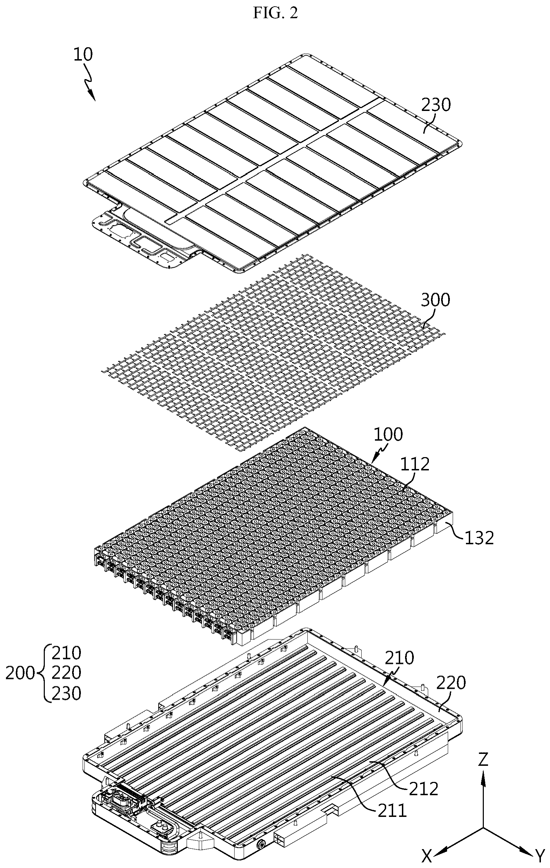

FIG. 1 is a schematic perspective view of the main configurations of a battery pack according to an embodiment of the present disclosure, and FIG. 2 is an exploded perspective view of FIG. 1.

Referring to FIGS. 1 and 2, a battery pack 10 according to an embodiment of the present disclosure may include a cell array structure 100 including a plurality of battery cells 112 and a pack case 200 accommodating the cell array structure 100.

The battery pack 10 may be a three-dimensional structure having a predetermined length, width, and height in the X-axis, Y-axis, and Z-axis directions, respectively. Such a battery pack 10 may have a structure suitable for being mounted on a body of a vehicle.

Referring mainly to FIG. 2, the cell array structure 100 may include a plurality of battery cells 112.

The plurality of battery cells 112 are secondary batteries, and may be provided as cylindrical secondary batteries, pouch-type secondary batteries, or prismatic secondary batteries. Hereinafter, this embodiment will be described assuming that the plurality of battery cells 112 are provided as cylindrical secondary batteries. These battery cells 112 may be a plurality of cylindrical secondary batteries that are arranged in a horizontal direction and stand upright in a vertical direction. Since the battery cells 112 stand upright in a vertical direction, electrical connection may be made at the upper surfaces of the battery cells 112, and venting may be advantageously structured to be guided to the lower surfaces of the battery cells 112. For example, the battery cells 112 may include a venting structure, such as a vent notch, at the bottom thereof. The vent notch is broken when the pressure inside the battery cells 112 rises abnormally, thereby discharging the gas inside to the outside. In this way, if the vent notch is included in the bottom of the battery cell 112, it may help guide the discharge direction of the venting gas toward the bottom of the battery pack 10.

A plurality of upright battery cells 112 in this way may be stacked in a horizontal direction or on a horizontal plane (X-Y plane) as shown in FIG. 2. And, a cooling structure may be interposed between each of the plurality of battery cells 112 or a structure (a configuration of a side frame 130 described below) that maintains the spacing between the battery cells 112 may be coupled to form a cell array structure 100, which is a single battery cell 112 array.

Here, the cell array structure 100 may be a single assembly (structure) provided in a flat type having a predetermined thickness (e.g., the height of the battery cell 112), and the cell array structure 100 may be provided to have a large area. In other words, it may be provided as a structure having a length and width much larger than its height. A large area may be easily implemented through a simple arrangement of the cell array structure 100.

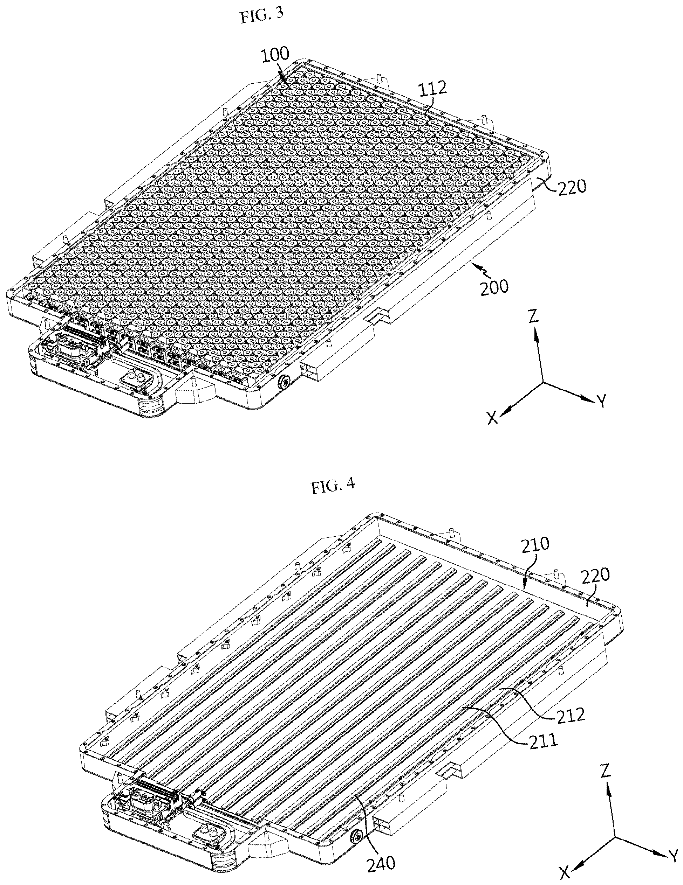

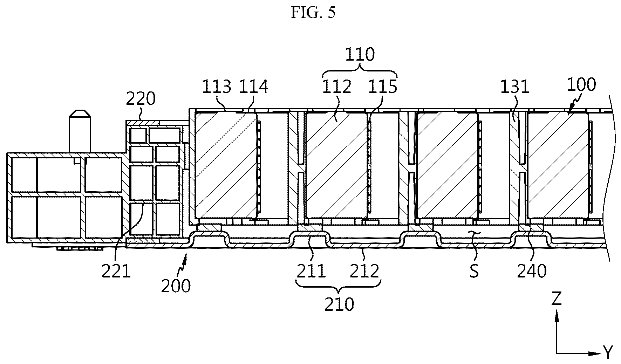

According to this embodiment, a predetermined structural rigidity may be secured through the cell array structure 100 provided as a single structure with such a large area. Accordingly, the cell array structure 100 may be a configuration of a so-called cell to pack. That is, the cell array structure 100 may be manufactured as a battery pack 10 by being mounted on a pack case 200 without a separate module case. According to the above embodiment of the present disclosure, the space efficiency of the battery pack 10 may be further improved by removing the module case or the like. FIG. 3 is a perspective view of a battery pack according to an embodiment of the present disclosure with a top cover plate removed, FIG. 4 is a perspective view of the bottom plate and the outer side wall in FIG. 2, and FIG. 5 is a longitudinal partial cross-sectional view of FIG. 3.

Referring to FIGS. 3 to 5 together with the preceding FIGS. 1 and 2, the pack case 200 may accommodate the cell array structure 100. As will be described in detail later, the pack case 200 may include a bottom plate 210, an outer side wall 220 disposed at an edge of the bottom plate 210, a busbar assembly 300 disposed above the cell array structure 100, and a top cover plate 230. Here, the cell array structure 100 may be accommodated in the internal space formed by the bottom plate 210, the outer side wall 220, and the top cover plate 230.

Referring to FIG. 5, the pack case 200 may be configured to support the cell array structure 100 while forming a predetermined venting space S at the bottom of the cell array structure 100.

That is, the bottom plate 210 may be disposed at the bottom of the cell array structure 100. The bottom plate 210 may face and support the cell array structure 100 at the bottom, and may partially protrude from the plate surface to form the venting space S.

To this end, the bottom plate 210 may be provided with an uneven longitudinal cross-section in one direction, as mainly shown in FIG. 5. The uneven shape may be formed in a direction (Y-axis direction) that intersects perpendicular to a direction (X-axis direction) in which the plurality of battery cells 112, the cooling tubes 115, and the side frames 130 are disposed in a row. And, a convex section 211 and a concave section 212 in the uneven shape may be formed along the length direction (X-axis direction) of the battery pack 10, respectively.

The cell array structure 100 may be seated and supported in the convex section 211. And, a venting space S may be formed in the concave section 212.

According to this embodiment, a venting space S in the uneven shape may be secured in the bottom plate 210 of the pack case 200, and thus venting gas, flames, or the like may be quickly discharged, thereby effectively dispersing heat energy and delaying heat transfer phenomenon.

Additionally, the cell array structure 100 with a larger area than the conventional one may be firmly supported by the convex section 211 of the bottom plate 210 from the bottom, so that it may be resistant to vibration or external impact.

As described above, according to this embodiment, a structure that supports the cell array structure 100 in the Z-axis direction while allowing the cell array structure 100 to be raised above a certain height in the Z-axis direction from the bottom surface of the pack case 200 of the battery pack 10 to secure a venting space S on the bottom surface of the cell array structure 100 may be implemented through the bottom plate 210 in the uneven shape. Such a structure may prevent mechanical/electrical loss of the cell array structure 100 from occurring due to external crush events or vibrations generated during vehicle driving, and has a remarkable advantage in the structural reinforcement effect.

Additionally, when the battery pack 10 is mounted on a vehicle, it is mounted on the lower portion of the vehicle body, and thus the venting gas is guided to the lower portion of the cell array structure 100. Therefore, it is safe by suppressing the venting gas from being directed to the passenger side located on the upper side of the battery pack 10.

The outer side wall 220 refers to a kind of frame disposed at an outer edge, and the bottom plate 210 may be coupled to the lower portion of the outer side wall 220. The outer side wall 220 is provided in a hollow shape therein, and a plurality of reinforcement partition walls 221 may be provided.

Hereinafter, the cell array structure 100 included in the battery pack according to an embodiment of the present disclosure will be described in more detail.

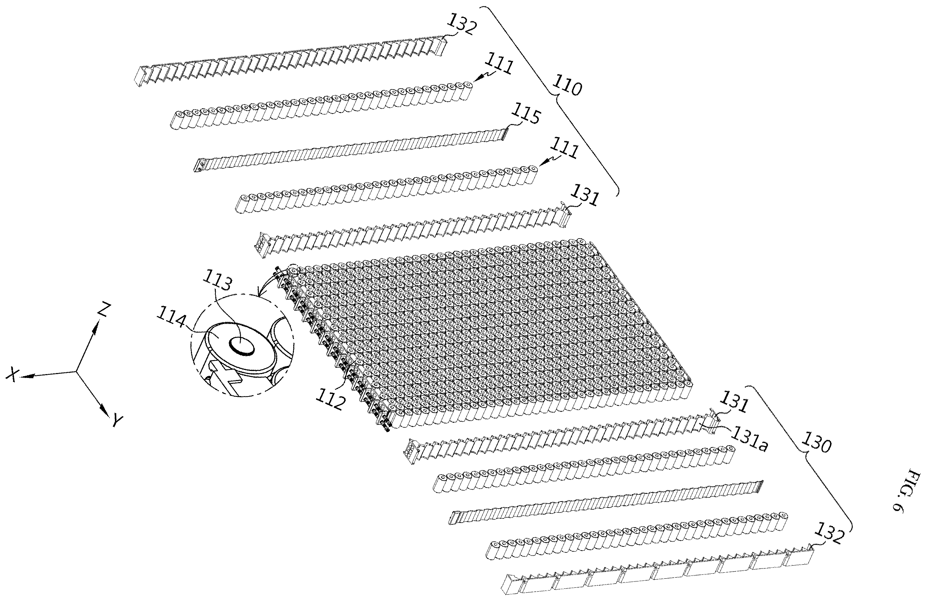

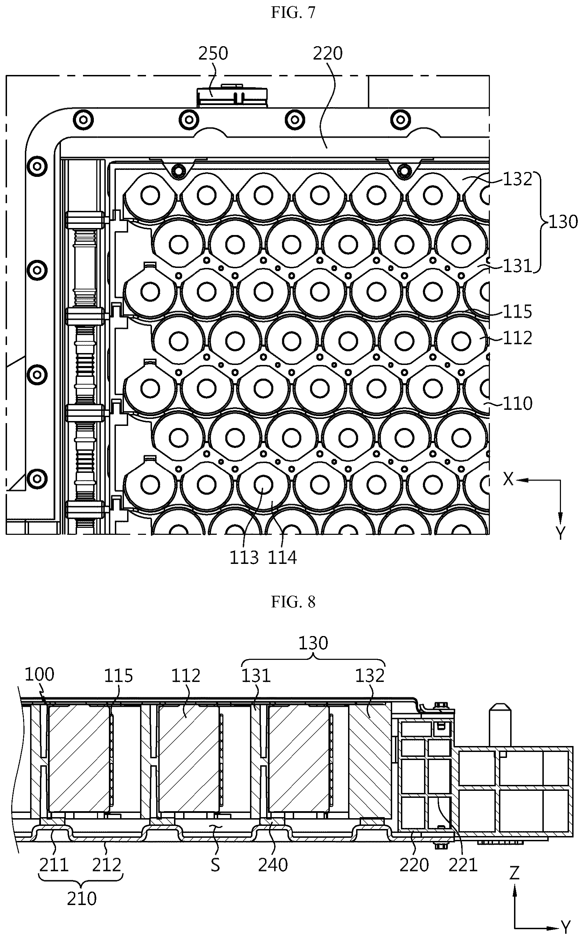

FIG. 6 is a view showing a cell array structure applied to a battery pack according to an embodiment of the present disclosure, and FIG. 7 is a view showing a part of an upper portion of a cell array structure accommodated in a battery pack according to an embodiment of the present disclosure.

Referring to FIGS. 6 and 7 and the preceding FIG. 5, the cell array structure 100 may include a plurality of unit cell groups 110 including the plurality of battery cells 112 and cooling tubes 115 attached to the plurality of battery cells 112, and side frames 130 disposed between the plurality of unit cell groups 110.

The battery cell 112 may have a tab portion 113 and an upper surface 114 thereon. The tab portion 113 may have a first polarity and the upper surface 114 may have a second polarity, and the tab portion 113 and the upper surface 114 may be electrically insulated from each other. The first polarity may be a positive electrode of the battery cell 112, and the second polarity may be a negative electrode of the battery cell 112. That is, the tab portion 113 may be a positive electrode portion of the battery cell 112, and the upper surface 114 may be a negative electrode portion of the battery cell 112. The tab portion 113 may be provided to protrude further than the upper surface 114. Alternatively, the tab portion 113 may be configured not to protrude further than the upper surface 114. For example, the tab portion 113 may be provided in a so-called tab-less structure in which the tab portion 113 is disposed on the same plane as the upper surface 114. Since such configurations of the battery cell 112 are widely known to those skilled in the art at the time of filing of the present disclosure, a more detailed description thereof will be omitted in this specification.

A plurality of such battery cells 112 may be gathered to form a single cell array 111. That is, a plurality of such cell arrays 111 may be provided in a row in the length direction (X-axis direction) of the battery pack 10. The number of battery cells 112 forming the cell array 111 is not limited.

And, the unit cell group 110 may include a cooling tube 115 between a pair of the cell arrays 111. That is, the unit cell group 110 may include a pair (two) of cell arrays 111 and a cooling tube 115 interposed between the pair of cell arrays 111. Here, the cooling tube 115 is a part that faces one surface of the cell array 111 and cools the battery cell 112. The cooling tube 115 may have a structure in which an empty space is provided and a cooling medium flows into the empty space, and is provided to face the outer surfaces of a plurality of battery cells 112, so that heat generated from the battery cell 112 may be directly transferred to the cooling medium.

In the unit cell group 110, a plurality of battery cells 112 are positioned on an outer surface, which inevitably creates a curved section. Accordingly, the cell array structure 100 may be provided with a side frame 130 that accommodates the curved section (the outer surface of the cylindrical battery) while maintaining and fixing the spacing between the plurality of battery cells 112.

The side frame 130 may be provided between the unit cell group 110 and the neighboring unit cell group 110, or at the front end of the unit cell group 110. Specifically, the side frame 130 may include a side structure 131 interposed between the unit cell groups 110 and a side wall 132 interposed between the pack case 200 and the unit cell group 110.

The side structure 131 may be disposed between the pair of unit cell groups 110. The side structure 131 may be disposed between the unit cell group 110 and the neighboring unit cell group 110 to fix at least one pair of unit cell groups 110 and maintain a spacing between the battery cells 112. As mainly shown in FIGS. 2 and 3, the side structure 131 may be provided with concave grooves 131a corresponding to the outer surface shape of the unit cell group 110 on one surface and the other surface in the length direction, respectively. The inner curvature or number of the concave grooves 131a may be determined according to the outer surface specifications of the unit cell group 110 or the battery cell 112 that is shape-coupled to the side structure 131.

A pair of side walls 132 may be disposed on both sides of the assembly direction (Y-axis direction) in which the unit cell group 110 and the side structure 131 are assembled. The side wall 132 may be provided at the outermost portion in the width direction (X-axis direction) of the cell array structure 100. One surface of the side wall 132 may be formed with the concave groove 131a described above to accommodate one surface of the unit cell group 110, while the other surface (opposite side surface) may be formed flat and provided to face the outer side wall 220 of the pack case 200. Accordingly, the cell array structure 100 and the outer side wall 220 may face each other, and no unnecessary gaps are formed.

In this way, a plurality of unit cell groups 110, a plurality of side structures 131, and side walls 132 may be assembled to provide one cell array structure 100. The cell array structure 100 having such a configuration may be a structure in which structural rigidity is secured without a separate module case.

Specifically, the side frame 130 may be disposed between a plurality of battery cells 112 within the cell array structure 100 or on one surface of the cell array 111 to fix and support the plurality of battery cells 112. And, the side frame 130 may be attached to the plurality of battery cells 112 to form a single structure, which is the cell array structure 100, and may have a larger area compared to the existing structure.

FIG. 8 is a longitudinal cross-sectional view in a battery pack according to an embodiment of the present disclosure.

Referring to FIG. 8 and the preceding FIG. 4, the pack case 200 may include a bottom plate 210 that faces and supports the cell array structure 100 at the bottom and partially protrudes from the plate surface to form the venting space S.

The bottom plate 210 may be provided with an uneven longitudinal cross-section in one direction. More specifically, the uneven shape may be formed in a direction (X-axis direction) that intersects perpendicular to a direction (Y-axis direction) in which the plurality of battery cells 112, the cooling tubes 115, and the side frames 130 are disposed in a row, as shown in FIG. 4.

The uneven shape may be composed of a convex section 211 formed to protrude upward and a concave section 212 formed to be recessed downward, based on an imaginary axial center in the thickness direction of the bottom plate 210.

The convex section 211 may be disposed to face a lower portion of the side frame 130. Specifically, the convex section 211 may be disposed to face a lower surface of at least one of the side structure 131 or the side wall 132. The convex section 211 may face and support a lower portion of the side structure 131 or a lower portion of the side wall 132. Accordingly, movement of the plurality of battery cells 112 coupled to the side frame 130 in the thickness direction (Z-axis direction) may be limited. Alternatively, the structural rigidity of the cell array structure 100 in the thickness direction may be maintained.

A cushioning member 240 may be interposed in at least one of between the convex section 211 and the side structure 131 and between the convex section 211 and the side wall 132. The cushioning member 240 may be made of a polyurethane (PU) material. Accordingly, the cushioning member 240 is provided between the cell array structure 100 and the convex section 211, which may be resistant to vibration or external impact.

Meanwhile, the concave section 212 may be disposed to be spaced apart from the lower portion of the unit cell group 110. The venting space S may be formed as a spaced apart space formed by the lower portion of the unit cell group 110 and the concave section 212. And, a width of the concave section 212 may be greater than a width of the convex section 211. Accordingly, when a thermal event occurs, venting gases or flames may be quickly discharged.

This uneven shape allows the bottom plate 210 to support only a portion of the cell array structure 100 (in this embodiment, the side structure 131 or the side wall 132), while the remaining portion of the cell array structure 100 other than the support portion may be utilized as a venting space S.

According to this embodiment, a venting space S in the uneven shape may be secured in the bottom plate 210 of the pack case 200, and thus venting gas, flames, or the like may be quickly discharged, thereby effectively dispersing heat energy and delaying heat transfer phenomenon.

Additionally, according to this embodiment, the cell array structure 100 with a larger area than the conventional one may be firmly supported by the convex section 211 of the bottom plate 210 from the bottom, so that it may be resistant to vibration or external impact. In particular, the convex section 211 may uniformly contact and support the entire area of the cell array structure 100 to limit movement of the cell array structure 100 in the thickness direction, thereby improving the structural rigidity of the cell array structure 100 against bending or distortion.

Additionally, problems of dislocation and shorting of electrical connection lines that may occur due to deformation such as distortion of the cell array structure 100 may be significantly reduced, and the risk of cracks or breakage at the mounting point between the cell array structure 100 and the pack case 200 may also be reduced.

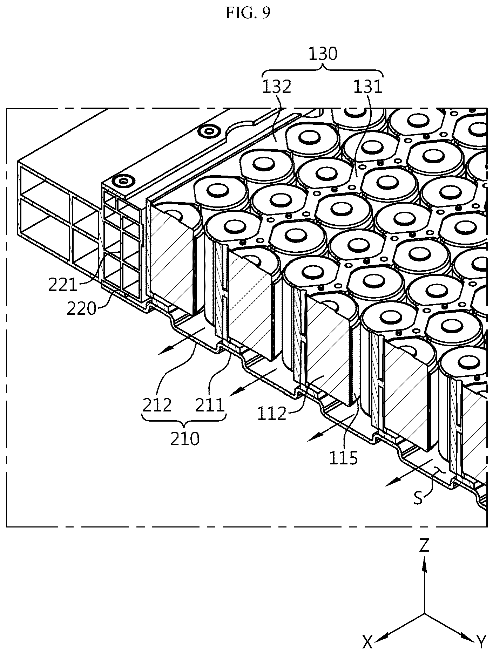

FIG. 9 is a view showing a flow of venting gas in a battery pack according to an embodiment of the present disclosure.

Hereinafter, a support method of the cell array structure 100 and a venting flow of the venting gas in the battery pack 10 according to this embodiment will be described with reference to FIGS. 1 to 9.

First, an assembly process of the cell array structure 100 will be briefly described.

Referring mainly to FIG. 6, a plurality of battery cells 112 are provided as one cell array 111, and a cooling tube 115 is interposed between a pair of cell arrays 111 and assembled into one unit cell group 110. A side structure 131 is interposed between the unit cell groups 110, and a side wall 132 is attached to the outermost portion of the battery pack 10 in the width direction (Y-axis direction), thereby providing one cell array structure 100. This cell array structure 100 may be further applied with an adhesive resin, a structural resin, or the like. Additionally, when assembling the cell array structure 100, a separate assembly facility or a pressing facility for pressing may be required.

As shown in FIG. 4, the cell array structure 100 may be seated in the pack case 200. In this process, as shown in FIG. 8, the convex section 211 may face and support a lower portion of the side structure 131 or a lower portion of the side wall 132. Accordingly, movement of the plurality of battery cells 112 coupled to the side frame 130 in the thickness direction (Z-axis direction) may be limited.

In this way, the cell array structure 100 with a larger area than the conventional one may be firmly supported by the convex section 211 of the bottom plate 210 from the bottom, so that it may be resistant to vibration or external impact. In particular, the convex section 211 may uniformly contact and support the entire area of the cell array structure 100, thereby improving the structural rigidity against bending or distortion in the thickness direction of the cell array structure 100. Additionally, problems of dislocation and shorting of electrical connection lines that may occur due to deformation such as distortion of the cell array structure 100 may be significantly reduced, and the risk of cracks or breakage at the mounting point between the cell array structure 100 and the pack case 200 may also be reduced.

Additionally, when the cell array structure 100 is seated, the concave section 212 may be disposed to be spaced apart from a lower portion of the unit cell group 110. As shown in FIG. 9, the venting space S may be formed as a spaced apart space formed by a lower portion of the unit cell group 110 and the concave section 212. A venting space S in the uneven shape may be secured in the bottom plate 210 of the pack case 200, and thus, when a thermal runaway event occurs, venting gas, flames, or the like may be quickly discharged, thereby effectively dispersing heat energy and delaying heat transfer phenomenon. In particular, as shown in FIG. 9, a venting path may be secured for each cell line, that is, for each unit cell group 110.

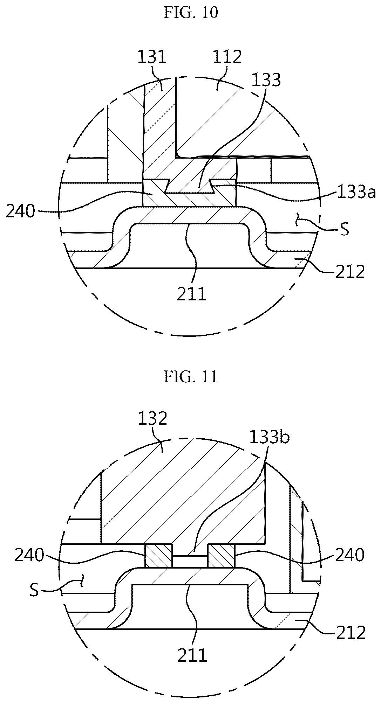

In addition, referring to FIG. 7, the pack case 200 may be provided with a venting valve 250 that is provided to communicate with the venting space S and is for discharging the venting gas or flames to the outside of the pack case 200. Accordingly, when an event such as a thermal runaway occurs, the venting gas or flames may be quickly discharged through the venting space S and escape to the outside of the pack case 200 through the venting valve 250. When the venting structure of the battery cell 112 included in the cell array structure 100 is formed at the bottom side of the battery cell 112 as described above, the high-temperature gas discharged downward through the venting structure of the battery cell 112 may be quickly discharged by being guided to the venting valve 250 through the bottom plate 210 located at the bottom of the cell array structure 100. The gas may be blocked by the uneven shape of the bottom plate 210 from spreading laterally inside the battery pack 10, and the gas may be blocked by the cell array structure 100 from spreading upward inside the battery pack 10. In this way, when a thermal event occurs in any battery cell 112 and high-temperature gas or flames are generated, the battery pack 10 according to the present disclosure may discharge the gas to the outside of the pack case 200 through the venting space S and the venting valve 250 in a specific direction rather than in all directions, and in the process of discharging the gas to the outside of the pack case 200, other battery cells 112 may be prevented from receiving thermal damage as much as possible. Next, other embodiments of the battery pack 10 of the present disclosure will be briefly described with reference to FIGS. 10 and 11.

FIGS. 10 and 11 are views showing a state of supporting a cell array structure in a battery pack according to other embodiments of the present disclosure.

The same reference numerals as in the previous drawings refer to the same members, and duplicate descriptions of the same members will be omitted and differences from the above-described embodiment will be mainly described.

In a battery pack 10 according to another embodiment of the present disclosure, a protruding structure may be provided on the side frame 130 when compared to the above-described embodiment.

Referring to FIG. 10, in the battery pack 10 according to this embodiment, at least one protrusion 133 formed to protrude downward may be provided at the lower portion of the side frame 130. In the drawing, the protrusion 133 is shown to be provided at the lower portion of the side structure 131, but it may also be provided at the lower portion of the side wall 132.

And, at least one recessed groove having a shape corresponding to the protrusion 133 may be formed at an upper surface of the cushioning member 240. At this time, the protrusion 133 may have an inclined surface 133a whose outer diameter increases as it goes downward. Accordingly, it may be forcibly fitted into the recessed groove.

Through this configuration, the coupling force of the cell array structure 100 to the bottom plate 210 may be increased, and as a result, the integrity of the cell array structure 100 to the pack case 200 may be increased, thereby further improving the structural rigidity of the battery pack 10 as a whole.

In a battery pack 10 according to still another embodiment of the present disclosure, a protruding structure that restricts unidirectional movement may be provided in the side frame 130.

Referring to FIG. 11, at least one protrusion 133b formed to protrude downward may be provided in the lower portion of the side frame 130 of the battery pack 10 according to this embodiment, and the protrusion 133b may be coupled to the recessed groove so as to restrict unidirectional movement. In the drawing, the recessed groove is formed long in the X-axis direction in the cushioning member 240, so that movement of the cell array structure 100 in the Y-axis direction may be restricted. On the other hand, the recessed groove may be formed in the Y-axis direction, and in this case, movement of the cell array structure 100 in the X-axis direction may be restricted. Overlapping may also be applied.

Meanwhile, in the previous embodiment, the configuration of the recessed groove was described as being formed in the cushioning member 240, but it may also be formed in the convex section 211.

Through this configuration, the cell array structure 100 may be firmly supported by the convex section 211 of the bottom plate 210 at the bottom, which may limit movement in the thickness direction and simultaneously restrict movement in one direction, thereby being more resistant to vibration or external impact.

Referring to FIG. 2 again, the battery pack 10 according to the present disclosure may include a busbar assembly 300.

The busbar assembly 300 may be disposed above the cell array structure 100 to electrically connect the plurality of battery cells 112. In this way, the busbar assembly 300 is a member that allows electrical connections to be made at the upper surface of the battery cells 112. And, the top cover plate 230 may be disposed on the upper area of the pack case 200 to cover the cell array structure 100 from the upper surface.

Meanwhile, the battery pack 10 according to the present disclosure may further include various devices for controlling charging and discharging of the battery pack 10, such as a battery management system (BMS), a current sensor, a fuse, and the like, although not shown.

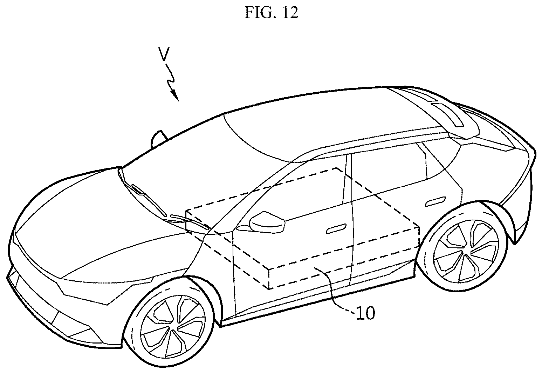

FIG. 12 is a view for describing a vehicle according to an embodiment of the present disclosure.

Referring to FIG. 12, the battery pack 10 according to the present disclosure may be applied to a vehicle V such as an electric vehicle or a hybrid vehicle. That is, the vehicle V according to the present disclosure may include the battery pack 10 according to the present disclosure. The battery pack 10 may be installed in a body frame or a trunk space under a vehicle seat, and when installed in the vehicle, the battery pack 10 may be disposed in an inverted state of the arrangement order thereof as necessary.

In the battery pack 10 according to the present disclosure, the venting gas is quickly guided from the lower portion of the cell array structure 100 to the outside of the battery pack 10 through the venting space S and thus is less likely to spread in all directions inside the battery pack 10, and the final discharge direction may not be directed toward the top of the battery pack 10. When the gas generated inside the battery pack is discharged in multiple directions rather than in one direction, the venting gas cannot be easily discharged to the outside of the battery pack, and the time for discharging the venting gas is prolonged, which may significantly reduce the safety of the battery pack.

According to the present disclosure, a venting space S using a bottom plate 210 in an uneven shape is formed below the cell array structure 100, and the venting gas may be discharged in one target direction, for example, a direction in which the venting valve 250 is formed. According to the above embodiment, when high-temperature gas or flames are discharged from the battery cell 112 in a situation such as thermal runaway, the discharged gas or flames may not be directed to the upper side. In particular, when a passenger is located on the upper side of the battery pack 10 such as in a vehicle V, the gas or flames may be suppressed or delayed from being directed to the passenger side according to the above embodiment. In particular, according to an embodiment of the present disclosure, the safety of users located on the upper side, such as passengers of the vehicle V, may be improved.

The terms indicating directions as used herein such as upper, lower, left, right, front, and rear are used for convenience of description only, and it is obvious to those skilled in the art that the term may change depending on the position of the stated element or an observer.

The present disclosure has been hereinabove described with regard to a limited number of embodiments and drawings, but the present disclosure is not limited thereto and various modifications and variations will be possible by those having ordinary skill in the technical field pertaining to the present disclosure within the technical aspect of the present disclosure and the scope of the appended claims and their equivalents.

### [Explanation of Reference Signs]

100: cell array structure
110: unit cell group
111: battery cell
112: cooling tube
130: side frame
131: side structure
132: side wall
133, 133b: protrusion
200: pack case
210: bottom plate
211: convex section
212: concave section
220: outer side wall
221: reinforcement partition wall
230: top cover plate
240: cushioning member
250: venting valve

## Claims

1. A battery pack, comprising:
a cell array structure comprising a plurality of battery cells; and
a pack case accommodating the cell array structure therein and supporting the cell array structure and having a venting space located below the cell array structure.

2. The battery pack according to claim 1, wherein the pack case comprises a bottom plate that faces and supports a bottom of the cell array structure and partially protrudes from a lower plate surface thereof to form the venting space.

3. The battery pack according to claim 2, wherein the bottom plate has an uneven longitudinal cross-section in one direction.

4. The battery pack according to claim 3, wherein the cell array structure comprises:
a plurality of unit cell groups comprising the plurality of battery cells and cooling tubes attached to the plurality of battery cells; and
side frames disposed between adjacent ones of the plurality of unit cell groups,
wherein the uneven longitudinal cross-section is formed in a direction that is perpendicular to a direction in which the plurality of battery cells, the cooling tubes, and the side frames are disposed in a row.

5. The battery pack according to claim 4, wherein the uneven longitudinal cross-section is composed of a convex section protruding upward and a concave section recessed downward, relative to an imaginary axial center in a thickness direction of the bottom plate.

6. The battery pack according to claim 5, wherein the convex section faces a lower portion of the side frame, and the concave section is spaced apart from a lower portion of one of the unit cell groups,
wherein the venting space is bounded by the lower portion of the one of the unit cell groups and the concave section.

7. The battery pack according to claim 5, wherein the side frame comprises:
a side structure interposed between the unit cell groups; and
a side wall interposed between the pack case and the unit cell group,
wherein the convex section faces a lower surface of at least one of the side structure or the side wall.

8. The battery pack according to claim 7, further comprising a cushioning member interposed between at least one of between the convex section and the side structure or the convex section and the side wall.

9. The battery pack according to claim 8, wherein the cushioning member is made of a polyurethane material.

10. The battery pack according to claim 6, wherein a width of the concave section is greater than a width of the convex section.

11. The battery pack according to claim 2, wherein the pack case further comprises:
a top cover plate covering an upper surface of the cell array structure; and
an outer side wall that is disposed adjacent to an outer edge and to which the bottom plate is coupled,
wherein the outer side wall has a hollow shape and has a plurality of reinforcement partition walls provided therein.

12. The battery pack according to claim 8, wherein a lower portion of the side frame has at least one protrusion protruding downward, and an upper surface of the cushioning member has at least one recessed groove formed therein having a shape complementary to the protrusion.

13. The battery pack according to claim 12, wherein the protrusion is forcibly fitted into the recessed groove.

14. The battery pack according to claim 12, wherein the protrusion is coupled to the recessed groove so that unidirectional movement of the side frame is restricted.

15. A vehicle comprising a battery pack according to any one of claims 1 to 14.
